(19) **Europäisches Patentamt / European Patent Office / Office européen des brevets**

(11) **EP 2 582 519 B1**

(12) **EUROPEAN PATENT SPECIFICATION**

(45) Date of publication and mention
of the grant of the patent:
**04.05.2016 Bulletin 2016/18**

(51) Int Cl.:
*B32B 27/08* (2006.01)    *B32B 27/32* (2006.01)
*C08L 23/08* (2006.01)    *C08L 53/00* (2006.01)

(21) Application number: **11729503.0**

(22) Date of filing: **14.06.2011**

(86) International application number:
**PCT/US2011/040265**

(87) International publication number:
**WO 2011/159648 (22.12.2011 Gazette 2011/51)**

(54) **SINGLE-SIDED STRETCH CLING FILM**

DEHNBARE, EINSEITIG SELBSTKLEBENDE FOLIE

FILM EXTENSIBLE, AUTOCOLLANT SUR UN CÔTÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.06.2010 US 355622 P**

(43) Date of publication of application:
**24.04.2013 Bulletin 2013/17**

(73) Proprietor: **Dow Global Technologies LLC
Midland, MI 48674 (US)**

(72) Inventors:
• **BATRA, Ashish
Carmel, IN 46032 (US)**
• **WALTON, Kim, L.
Lake Jackson, TX 77566 (US)**

• **MANDARE, Prashant
Lake Jackson, TX 77566 (US)**
• **GUERRA, Suzanne
Lake Jackson, TX 77566 (US)**
• **PATEL, Rajen, M.
Lake Jackson, TX (US)**
• **ROLLINS, Christina, B.
Midland, MI 48640 (US)**
• **RUIZ, Jose, E.
Sugar Land, TX 77479 (US)**
• **HOBSON, Jon, W.
Lake Jackson, TX 77566 (US)**

(74) Representative: **V.O.
P.O. Box 87930
2508 DH Den Haag (NL)**

(56) References cited:
**US-A- 6 117 553    US-A1- 2007 292 693**

**Description**

BACKGROUND

Single-sided stretch cling films are used by the packaging industry to over-wrap packages of goods and/or food. In a typical application, the film is stretched as it is applied to the goods in order to develop sufficient holding force for maintaining the integrity of the goods (such as a pallet of goods) to be unitized. This typically requires the single-sided stretch cling film to be capable of being stretched to at least 30%, of its original length, while still maintaining its mechanical integrity and exhibiting adequate cling force between the cling layers and release layers where they contact. Consequently, a single-sided stretch cling film requires a balance of properties to be effective for over-wrap applications. Such properties include, for example, stretch, tear, cling, processability, impact resistance, elasticity, puncture, tensile, as well as, recovery, shrink characteristics, vacuum drawability, abuse or implosion resistance and low noise during unwinding operations.

US 2007/292693 discloses single-sided stretch cling films comprising a cling layer (A) comprising 0.1 wt. % to 20 wt. % of a propylene base copolymer and as the main component an LLDPE having a density greater than 0.91 g/cm$^3$.

The cling film additionally comprises a release layer consisting of an ethylene based polymer and, optionally, a core layer also consisting of an ethylene based polymer.

A need exists for a single-sided stretch cling film with improved cling while maintaining a balance of the foregoing properties.

SUMMARY

The present disclosure is directed to a single-sided stretch cling film having three layers. A unique blend in the cling layer provides the single-sided stretch cling film with improved cling force.

The present disclosure provides a single-sided stretch cling film having three layers. The film includes a cling layer (A), a release layer (B), and a core layer (C) located between the cling layer and the release layer. The cling layer includes greater than 5 wt % to 40 wt % of an ethylene/$\alpha$-olefin block copolymer and from 60 wt % to less than 95 wt % of an ethylene-based polymer. The release layer (B) is selected from an ethylene-based polymer, a propylene-based polymer and combinations thereof. The core layer includes an ethylene-based polymer. The film has a cling force from 20 g to 100 g, said cling force being measured using a LanTech Stretch Wrapper as described herein-below.

In a preferred embodiment, a single-sided stretch cling film having three layers is provided, wherein the cling layer (A) includes from greater than 5 wt % to 20 wt % of the ethylene/$\alpha$-olefin block copolymer and from less than 95 wt % to 80 wt % of an ethylene-based polymer; and wherein the film has a cling force from 20 g to 50 g.

In an other preferred embodiment of the single-sided stretch cling film of the invention, the cling layer (A) includes the ethylene/$\alpha$-olefin block copolymer and as ethylene-based polymer a linear low density polyethylene. This linear low density polyethylene has a density greater than 0.91 g/cm$^3$ (g/cc).

An advantage of the present disclosure is the provision of an improved single-sided stretch cling film.

An advantage of the present disclosure is a single-sided stretch cling film with olefin block copolymer in the cling layer and having improved cling force compared to using a random ethylene copolymer in the cling layer.

An advantage of the present disclosure is the provision of a single-sided stretch cling film with improved pallet integrity.

An advantage of the present disclosure is the provision of a single-sided stretch cling film that is tackifier-free.

An advantage of the present disclosure is the provision of a single-sided stretch cling film that is free of polyisobutylene.

DETAILED DESCRIPTION

The present disclosure provides a single-sided stretch cling film. The film has three layers-a cling layer (A), a release layer (B), and a core layer (C) located between the cling layer and the release layer. The cling layer is a blend of greater than 5 wt% to 40 wt% olefin block copolymer (OBC) and from 60 wt% to less than 95 wt% ethylene-based polymer. The blend ratio of the OBC and the ethylene-based polymer in the cling layer can be adjusted to form a film having a cling force from 20g to 100 g. Cling force is measured at 250% pre-stretch and 4.5 kg (10 lb) F2 force after 48 hours of production.

A "single-sided stretch cling film," as used herein, is a stretchable film having one surface which exhibits a cling property and an opposite surface which exhibits low cling or is cling-free. The present single-sided stretch cling films include a first surface-the cling layer-that exhibits cling. The release layer in the present films is located on the surface opposite the cling layer. The release layer exhibits low cling, or no cling. The single-sided stretch cling film is typically wrapped around an article (including food) or group of articles to form a unitized package or "pallet." The unitized package is at least partially held together by the retaining force applied by over-wrap, which is stretched during the wrapping procedure. The package article or group of articles is typically wrapped so that the release layer of the film is located on the side of the film away from the article and the cling layer is located on the side of the film closest to the article.

## 1. **Olefin Block Copolymer**

The cling layer contains olefin block copolymer (OBC). Optionally, OBC may be present in the release layer and/or in the core layer. The term "olefin block copolymer" or "OBC" is an ethylene/$\alpha$-olefin multi-block copolymer and includes ethylene and one or more copolymerizable $\alpha$-olefin comonomer in polymerized form, characterized by multiple blocks or segments of two or more polymerized monomer units differing in chemical or physical properties. The terms "interpolymer" and "copolymer" are used interchangeably herein. In some embodiments, the multi-block copolymer can be represented by the following formula:

$$(AB)_n$$

where n is at least 1, preferably an integer greater than 1, such as 2, 3, 4, 5, 10, 15, 20, 30, 40, 50, 60, 70, 80, 90, 100, or higher, "A" represents a hard block or segment and "B" represents a soft block or segment. Preferably, As and Bs are linked in a substantially linear fashion, as opposed to a substantially branched or substantially star-shaped fashion. In other embodiments, A blocks and B blocks are randomly distributed along the polymer chain. In other words, the block copolymers usually do not have a structure as follows.

$$AAA\text{-}AA\text{-}BBB\text{-}BB$$

In still other embodiments, the block copolymers do not usually have a third type of block, which comprises different comonomer(s). In yet other embodiments, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

The olefin block copolymer includes various amounts of "hard" and "soft" segments. "Hard" segments are blocks of polymerized units in which ethylene is present in an amount greater than 95 weight percent, or greater than 98 weight percent based on the weight of the polymer. In other words, the comonomer content (content of monomers other than ethylene) in the hard segments is less than 5 weight percent, or less than 2 weight percent based on the weight of the polymer. In some embodiments, the hard segments include all, or substantially all, units derived from ethylene. "Soft" segments are blocks of polymerized units in which the comonomer content (content of monomers other than ethylene) is greater than 5 weight percent, or greater than 8 weight percent, greater than 10 weight percent, or greater than 15 weight percent based on the weight of the polymer. In some embodiments, the comonomer content in the soft segments can be greater than 20 weight percent, greater than 25 weight percent, greater than 30 weight percent, greater than 35 weight percent, greater than 40 weight percent, greater than 45 weight percent, greater than 50 weight percent, or greater than 60 weight percent.

The soft segments can be present in an OBC from 1 weight percent to 99 weight percent of the total weight of the OBC, or from 5 weight percent to 95 weight percent, from 10 weight percent to 90 weight percent, from 15 weight percent to 85 weight percent, from 20 weight percent to 80 weight percent, from 25 weight percent to 75 weight percent, from 30 weight percent to 70 weight percent, from 35 weight percent to 65 weight percent, from 40 weight percent to 60 weight percent, or from 45 weight percent to 55 weight percent of the total weight of the OBC. Conversely, the hard segments can be present in similar ranges. The soft segment weight percentage and the hard segment weight percentage can be calculated based on data obtained from DSC or NMR. Such methods and calculations are disclosed in U.S. patent application serial no. 11/376,835, published as US-A-2006/0199930.

The term "crystalline" if employed, refers to a polymer that possesses a first order transition or crystalline melting point (Tm) as determined by differential scanning calorimetry (DSC) or equivalent technique. The term may be used interchangeably with the term "semicrystalline". The term "amorphous" refers to a polymer lacking a crystalline melting point as determined by differential scanning calorimetric (DSC) or equivalent technique.

The term "multi-block copolymer" or "segmented copolymer" is a polymer comprising two or more chemically distinct regions or segments (referred to as "blocks") preferably joined in a linear manner, that is, a polymer comprising chemically differentiated units which are joined end-to-end with respect to polymerized ethylenic functionality, rather than in pendent or grafted fashion. In an embodiment, the blocks differ in the amount or type of incorporated comonomer, density, amount of crystallinity, crystallite size attributable to a polymer of such composition, type or degree of tacticity (isotactic or syndiotactic), regio-regularity or regio-irregularity, amount of branching (including long chain branching or hyper-branching), homogeneity or any other chemical or physical property. Compared to block interpolymers of the prior art, including interpolymers produced by sequential monomer addition, fluxional catalysts, or anionic polymerization techniques, the present OBC is characterized by unique distributions of both polymer polydispersity (PDI or Mw/Mn or MWD), block length distribution, and/or block number distribution, due, in an embodiment, to the effect of the shuttling agent(s) in combination with multiple catalysts used in their preparation.

In an embodiment, the OBC is produced in a continuous process and possesses a PDI from 1.7 to 3.5, or from 1.8 to 3, or from 1.8 to 2.5, or from 1.8 to 2.2. When produced in a batch or semi-batch process, the OBC possesses PDI from 1.0 to 3.5, or from 1.3 to 3, or from 1.4 to 2.5, or from 1.4 to 2.

In addition, the olefin block copolymer possesses a PDI fitting a Schultz-Flory distribution rather than a Poisson distribution. The present OBC has both a polydisperse block distribution as well as a polydisperse distribution of block sizes. This results in the formation of polymer products having improved and distinguishable physical properties. The theoretical benefits of a polydisperse block distribution have been previously modeled and discussed in Potemkin, Physical Review E (1998) 57 (6), pp. 6902-6912, and Dobrynin, J. Chem.Phvs. (1997) 107 (21), pp 9234-9238.

In an embodiment, the present olefin block copolymer possesses a most probable distribution of block lengths. In an embodiment, the olefin block copolymer is defined as having:

(A) Mw/Mn from 1.7 to 3.5, at least one melting point, Tm, in degrees Celsius, and a density, d, in grams/cubic centimeter, where in the numerical values of Tm and d correspond to the relationship:

$$Tm > -2002.9 + 4538.5(d) - 2422.2(d)^2, \text{ and/or}$$

(B) Mw/Mn from about 1.7 to about 3.5, and is characterized by a heat of fusion, $\Delta H$ in J/g, and a delta quantity, $\Delta T$, in degrees Celsius defined as the temperature difference between the tallest DSC peak and the tallest Crystallization Analysis Fractionation ("CRYSTAF") peak, wherein the numerical values of $\Delta T$ and $\Delta H$ have the following relationships:

$$\Delta T > -0.1299 \, (\text{)}H) + 62.81 \text{ for } \Delta H \text{ greater than zero and up to } 130 \text{ J/g}$$

$$\Delta T \geq 48°C \text{ for } \Delta H \text{ greater than } 130 \text{ J/g}$$

wherein the CRYSTAF peak is determined using at least 5 percent of the cumulative polymer, and if less than 5 percent of the polymer has an identifiable CRYSTAF peak, then the CRYSTAF temperature is 30°C; and/or

(C) elastic recovery, Re, in percent at 300 percent strain and 1 cycle measured with a compression-molded film of the ethylene/$\alpha$-olefin interpolymer, and has a density, d, in grams/cubic centimeter, wherein the numerical values of Re and d satisfy the following relationship when ethylene/$\alpha$-olefin interpolymer is substantially free of crosslinked phase:

$$Re > 1481 - 1629(d); \text{ and/or}$$

(D) has a molecular weight fraction which elutes between 40°C and 130°C when fractionated using TREF, characterized in that the fraction has a molar comonomer content of at least 5 percent higher than that of a comparable random ethylene interpolymer fraction eluting between the same temperatures, wherein said comparable random ethylene interpolymer has the same comonomer(s) and has a melt index, density and molar comonomer content (based on the whole polymer) within 10 percent of that of the ethylene/$\alpha$-olefin interpolymer; and/or

(E) has a storage modulus at 25°C, G'(25°C), and a storage modulus at 100°C, G'(100°C), wherein the ratio of G'(25°C) to G'(100°C) is in the range of about 1:1 to about 9:1.

The olefin block copolymer may also have:

(F) a molecular fraction which elutes between 40°C and 130°C when fractionated using TREF, characterized in that the fraction has a block index of at least 0.5 and up to 1 and a molecular weight distribution, Mw/Mn, greater than 1.3; and/or

(G) average block index greater than zero and up to 1.0 and a molecular weight distribution, Mw/Mn greater than 1.3. It is understood that the olefin block copolymer may have one, some, all, or any combination of properties (A)-(G).

Suitable monomers for use in preparing the present OBC include ethylene and one or more addition polymerizable monomers other than ethylene. Examples of suitable comonomers include straight-chain or branched α-olefins of 3 to 30, preferably 3 to 20, carbon atoms, such as propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene and 1-eicosene; cyclo-olefins of 3 to 30, preferably 3 to 20, carbon atoms, such as cyclopentene, cycloheptene, norbornene, 5-methyl-2-norbornene, tetracyclododecene, and 2-methyl-1,4,5,8-dimethano-1,2,3,4,4a,5,8,8a-octahydronaphthalene; di-and polyolefins, such as butadiene, isoprene, 4-methyl-1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene, ethylidenenorbornene, vinyl norbornene, dicyclopentadiene, 7-methyl-1,6-octadiene, 4-ethylidene-8-methyl-1,7-nonadiene, and 5,9-dimethyl-1,4,8-decatriene; and 3-phenylpropene, 4-phenylpropene, 1,2-difluoroethylene, tetrafluoroethylene, and 3,3,3-trifluoro-1-propene.

In an embodiment, the olefin block copolymer has a density from 0.85 g/cm$^3$ (g/cc) to 0.88 g/cm$^3$ (g/cc).

In an embodiment, the olefin block copolymer has a melt index (MI) from 0.1 g/10 min to 10 g/10, or from 0.1 g/10 min to 1.0 g/10 min, or from 0.1 g/10 min to 0.5 g/10 min as measured by ASTM D 1238 (190°C/2.16 kg).

The olefin block copolymer has a 2% secant modulus greater than zero and less than 150, or less than 140, or less than 120, or less than 100, MPa as measured by the procedure of ASTM D 882-02.

The present OBC has a melting point of less than about 125°C. The melting point is measured by the differential scanning calorimetry (DSC) method described in WO 2005/090427 (US2006/0199930).

In an embodiment, the olefin block copolymer has a density from 0.866 g/cm$^3$ (g/cc) to 0.888 g/cm$^3$ (g/cc) and contains greater than 0 wt % to 40 wt %, or from 5 wt % to 25 wt %, or from 10 wt % to 15 wt % of a hard segment. The hard segment contains from 0 mol % to less than 0.5 mol % units derived from comonomer. The olefin block copolymer also contains from 70 wt % to 99 wt %, or from 75 wt % to 95 wt %, or from 90 wt % to 85 wt % of a soft segment. The soft segment contains from 13 mol % to 28 mol %, or from 15 mol % to 20 mol %, or 18 mol %, units derived from comonomer. In an embodiment, the comonomer is butene or octene. Comonomer content is measured by nuclear magnetic resonance (NMR) spectroscopy.

## 2. Ethylene-Based Polymer

The cling layer also includes an ethylene-based polymer. The term, "ethylene-based polymer," as used herein, is a polymer that comprises a majority weight percent polymerized ethylene monomer (based on the total weight of polymerizable monomers), and optionally may comprise at least one polymerized comonomer. The ethylene-based polymer may include greater than 50, or greater than 60, or greater than 70, or greater than 80, or greater than 90 weight percent units derived from ethylene (based on the total weight of the ethylene-based polymer). The ethylene-based polymer may be an ethylene homopolymer or an ethylene/C$_3$-C$_{10}$ alpha-olefin copolymer. The ethylene-based polymer has a density greater than 0.905 g/cm$^3$ (g/cc), or greater than 0.910 g/cm$^3$ (g/cc), or greater than 0.915 g/cm$^3$ (g/cc), or greater than 0.917 g/cm$^3$ (g/cc), or greater than 0.920 g/cm$^3$ (g/cc). The ethylene-based polymer has a melt index from 0.1 g/10 min to 20 g/10 min.

The ethylene-based polymer may be a Ziegler-Natta catalyzed polymer, a metallocene-catalyzed polymer, a constrained geometry catalyst catalyzed polymer, and may be made using gas phase, solution, or slurry polymer manufacturing processes. The ethylene-based polymer may also be an OBC (*i.e.*, a second OBC, OBC as discussed above) which is made by way of chain shuttling polymerization.

Nonlimiting examples of ethylene-based polymer suitable for the cling layer include ethylene/octene substantially linear copolymers available from The Dow Chemical Company under the tradename "AFFINITY", ethylene/octene and ethylene/hexene linear copolymers available from The Dow Chemical Company under the tradename "DOWLEX", ethylene/octene linear copolymers available from The Dow Chemical Company under the tradename "ATTANE", ethylene/octene enhanced polyethylene available from The Dow Chemical Company under the tradename "ELITE", ethylene-based copolymers available from Polimeri Europa under the tradenames "CLEARFLEX" and "FLEXIRENE", ethylene/alpha-olefin copolymers available from ExxonMobil Chemical under the tradenames "Escorene", "Exact" and "Exceed", ethylene/alpha-olefin copolymers available from BP Petrochemicals under the tradename "INNOVEX", ethylene/alpha-olefin copolymers available from Basell under the tradenames "TUFLEXEN" and "LUPOLEX", ethylene/alpha-olefin copolymers available from DSM under the tradename "STAMYLEX", and ethylene/alpha-olefin copolymers available from Sabic under the tradename "LADENE, and any of the foregoing OBCs, under the tradename INFUSE, and available from The Dow Chemical Company.

The ethylene-based polymer may be selected from a linear low density polyethylene (LLDPE), a very low density polyethylene (VLDPE) having a density from 0.880 g/cm$^3$ (g/cc) to 0.914 g/cm$^3$ (g/cc), an ultra low density polyethylene (ULDPE) having a density from (0.885 to 0.915 g/cm$^3$ (g/cc)), an ethylene/octene interpolymer, and combinations thereof. In an embodiment, the ethylene-based polymer present in the cling layer is a LLDPE that is an ethylene/octene copolymer with a density greater than 0.91 g/cm$^3$ (g/cc), or greater than 0.915 g/cm$^3$ (g/cc), or greater than 0.917 g/cm$^3$ (g/cc). In a further embodiment, the LLDPE is a Ziegler-Natta catalyzed ethylene/octene copolymer.

Applicants have surprisingly discovered that a blend of OBC and ethylene-based polymer, and a blend of OBC/LLDPE in particular, produces a cling layer with improved cling while simultaneously providing suitable stretch, tear, processability, impact resistance, elasticity, puncture, and tensile properties.

### 3. **Release Layer and Core Layer**

The composition for the release layer and the core layer may be the same or may be different. The release layer and/or the core layer may be composed of any ethylene-based polymer (or combinations thereof) as disclosed above for the cling layer.

In addition, the release layer and/or the core layer may include a propylene-based polymer, alone or in combination with any foregoing ethylene-based polymer. The term, "propylene-based polymer," as used herein, is a polymer that comprises a majority weight percent polymerized propylene monomer (based on the total amount of polymerizable monomers), and optionally may comprise at least one polymerized comonomer. The propylene-based polymer may include greater than 50, or greater than 60, or greater than 70, or greater than 80, or greater than 90 weight percent units derived from propylene (based of the total weight of the propylene-based polymer). The propylene-based polymer may be propylene homopolymer, propylene/ethylene copolymer, or propylene/C$_4$-C$_{10}$ alpha-olefin copolymer. The propylene polymer may be polypropylene homopolymer (hPP), random polypropylene copolymer (rcPP), impact propylene copolymer, high melt strength polypropylene (HMS-PP), high impact polypropylene (HIPP), isotactic polypropylene (iPP), syndiotactic polypropylene (sPP), and combinations thereof.

In an embodiment, the release layer and/or the core layer is selected from LLDPE, LDPE, propylene homopolymer, propylene/ethylene copolymer, ethylene/octene copolymer, and any combination thereof.

In an embodiment, the olefin block copolymer includes greater than 5 wt % to 35 wt % hard segment and from 13 mol % to 28 mol % units derived from octene in a soft segment.

In an embodiment, the ethylene-based polymer in cling layer is an LLDPE.

In an embodiment, the LLDPE has a density greater that 0.91 g/cm$^3$ (g/cc).

In an embodiment, at least one of the core layer and the release layer contains an LLDPE.

In an embodiment, each layer contains an LLDPE with a density greater than 0.91 g/cm$^3$ (g/cc).

In an embodiment, the film is a cast extruded film.

### 4. **Additives**

Optional additives that may be present in the film include antioxidants (*e.g.*, hindered phenolics (such as Irganox® 1010 or Irganox® 1076), free-radical scavengers, phosphites (*e.g.*, Irgafos® 168 all trademarks of Ciba Geigy), pigments (TiO$_2$ particles), colorants, fillers (mineral particles, lithopone formulations), anti-fogging agent, and any combination of the foregoing. Anti-block and/or slip additives optionally may be added to the release layer, in order to improve the release properties of the release layer. Non-limiting examples of anti-block additives include formulations based on CaCO$_3$ and/or SiO$_2$. Non-limiting examples of slip additives include formulations based on ercucamide and/or oleamide. If added, these anti-block and/or slip additives should be at such a level that they do not adversely affect the cling properties of the cling layer to the release layer.

In an embodiment, the present film and/or the present cling layer are/is free of tackifiers, and/or free of polyisobutylene. The term "free of" in this paragraph is an amount less than 1000 ppm based on the total weight of the film.

The present single-sided stretch cling film may be prepared by way of cast film coextrusion or blown film coextrusion. A blown film is biaxially oriented whereas a cast extruded film is uni-axially oriented.

In an embodiment, the single-sided stretch cling film is a cast extruded film. The cast extruded film is uni-axially oriented (machine direction). The cast extruded film has a thickness from 5 $\mu$m (microns) to 50 $\mu$m (microns), or from 10 $\mu$m (microns) to 40 $\mu$m (microns), or from 15 $\mu$m (microns) to 30 $\mu$m (microns). It has been found that the cling force of cast extruded film is typically an order of magnitude greater than the cling force of a comparative blown film. Consequently, cast extruded single-sided stretch cling film advantageously avoids the necessity of a tackifier such as polyisobutylene as discussed above.

The layer configuration for the present single-sided stretch cling films is A/CB. In an embodiment, the cling layer (A) is from 5% to 20% of the total film thickness, the core layer (C) is from 60% to 90% of the total film thickness, and the release layer (B) is from 5% to 20% of the total film thickness.

The present disclosure provides a further film. In an embodiment, a single-sided stretch cling film having three layers is provided and includes a cling layer, a release layer and a core layer. The core layer is located between the cling layer and the release layer. The cling layer includes greater than 5 wt % to 20 wt %, or from 10 wt % to 15 wt %, of an olefin block copolymer and less than 95 wt % to 80 wt %, or from 90 wt % to 85 wt %, of an ethylene-based polymer. The release layer is selected from an ethylene-based polymer and/or a propylene-based polymer. The core layer is an ethylene-based polymer. The film has a cling force from 20 g to 50 g.

In an embodiment, the OBC in the cling layer has greater than 5 wt % to 35 wt % hard segment and from 14 mol % to 28 mol % comonomer content in the soft segment. In a further embodiment, the comonomer is octene.

In an embodiment, the ethylene-based polymer in cling layer is an LLDPE. In a further embodiment, the LLDPE in the cling layer has a density greater that 0.91 g/cm$^3$ (g/cc), or greater than or equal to 0.915 g/cm$^3$ (g/cc), or greater than or equal to 0.917 g/cm$^3$ (g/cc).

In an embodiment, each layer contains LLDPE. In a further embodiment, the LLDPE has a density greater that 0.91 g/cm$^3$ (g/cc), or greater than or equal to 0.915 g/cm$^3$ (g/cc), or greater than or equal to 0.917 g/cm$^3$ (g/cc).

The disclosure provides a further film. In an embodiment, a single-sided stretch cling film having three layers is provided. The film includes a cling layer (A), a core layer (C) and a release layer (B). The core layer is located between the cling layer and the release layer. The cling layer includes an olefin block copolymer and an LLDPE. The LLDPE has a density greater than 0.91 g/cm$^3$ (g/cc), or greater than or equal to 0.915 g/cm$^3$ (g/cc), or greater than or equal to 0.917 g/cm$^3$ (g/cc). The release layer includes a member selected from an ethylene-based polymer, a propylene-based polymer, and combinations thereof. The core layer includes an ethylene-based polymer. The film has a cling force from 20 g to 100 g measured after 48 hours of production.

In an embodiment, each of the cling layer, the release layer, and the core layer include an LLDPE. The LLDPE in the cling layer, the core layer, the release layer may be the same or different. In an embodiment, the LLDPE in the cling layer and at least one of the core layer and the release layer has a density greater than 0.91 g/cm$^3$ (g/cc). In a further embodiment, each of the cling layer, the core layer, and release layer contain an LLDPE having a density greater than 0.91 g/cm$^3$ (g/cc), or greater than or equal to 0.915 g/cm$^3$ (g/cc), or greater than or equal to 0.917 g/cm$^3$ (g/cc).

In an embodiment, the cling layer includes from 25 wt% to 35 wt% olefin block copolymer and from 75 wt % to 65 wt % LLDPE. The film has a cling force from 50 g to 80 g measured after 48 hours of production.

In an embodiment, the cling layer includes greater than 5 wt % to 20 wt % olefin block copolymer and less than 95 wt % to 80 wt % LLDPE. The film has a cling force from 20 g to 50 g measured after 48 hours of production.

In an embodiment, the OBC in the cling layer has greater than 5 wt % to 35 wt % hard segment and from 13 mol % to 28 mol % comonomer content in the soft segment. In a further embodiment, the comonomer is octene.

Any of the foregoing single-sided stretch cling films may comprise two or more embodiments disclosed herein.

A nonlimiting example of a suitable application for the present single-sided stretch cling films is the over-wrap packaging of goods, and in particular the unitizing of pallet loads. There are a variety of over-wrapping techniques which are employed utilizing such single sided stretch cling films including locating the pallet load to be wrapped atop a rotating platform. As the stretch wrap film is loaded on the girth of the pallet load, the pallet load is rotated on its platform. The single-sided stretch cling film is applied from a continuous film roll. Braking tension is applied to the continuous roll of film so that the film is continuously stretched by the rotating pallet load. Usually the single-sided stretch cling film, located adjacent to the rotating pallet load is vertically positioned and the rotating platform or turntable may be operated at speeds ranging from 5 to 50 revolutions per minute.

At the completion of the over-wrapping operation, the turntable is stopped while the film is cut and attached to the previous layer of the film by employing tack sealing, adhesive tapes, spray adhesives, pressure sealing etc. Depending upon the width of the single-sided stretch cling film roll, the load being over-wrapped may be shrouded in the film while the vertically positioned film roll remains fixed in a vertical position or the vertically positioned film roll (for example in the case of relatively narrow film widths and relatively wider pallet loads) may be arranged to move in a vertical direction as the load is being overwrapped whereby a spiral wrapping effect is achieved on the packaged goods.

Other nonlimiting examples of applications for the present single-sided stretch cling films include: wrapping of silage bales and metal and paper reels, collation wrapping of cardboard and plastic trays and profiles made from wood, plastics and metals.

DEFINITIONS

All references to the Periodic Table of the Elements herein shall refer to the Periodic Table of the Elements, published and copyrighted by CRC Press, Inc., 2003. Also, any references to a Group or Groups shall be to the Groups or Groups reflected in this Periodic Table of the Elements using the IUPAC system for numbering groups. Unless stated to the contrary, implicit from the context, or customary in the art, all parts and percents are based on weight.

Any numerical range recited herein, includes all values from the lower value to the upper value, in increments of one unit, provided that there is a separation of at least 2 units between any lower value and any higher value. As an example, if it is stated that the amount of a component, or a value of a compositional or a physical property, such as, for example, amount of a blend component, softening temperature, melt index, etc., is between 1 and 100, it is intended that all individual values, such as, 1, 2, 3, etc., and all subranges, such as, 1 to 20, 55 to 70, 197 to 100, etc., are expressly enumerated in this specification. For values which are less than one, one unit is considered to be 0.0001, 0.001, 0.01 or 0.1, as appropriate. These are only examples of what is specifically intended, and all possible combinations of numerical values between the lowest value and the highest value enumerated, are to be considered to be expressly stated in this application. In other words, any numerical range recited herein includes any value or subrange within the stated range. Numerical ranges have been recited, as discussed herein, reference melt index, melt flow rate, and other properties.

The terms "blend" or "polymer blend," as used herein, is a blend of two or more polymers. Such a blend may or may not be miscible (not phase separated at molecular level). Such a blend may or may not be phase separated. Such a blend may or may not contain one or more domain configurations, as determined from transmission electron spectroscopy, light scattering, x-ray scattering, and other methods known in the art.

The term "composition," as used herein, includes a mixture of materials which comprise the composition, as well as reaction products and decomposition products formed from the materials of the composition.

The term "comprising," and derivatives thereof, is not intended to exclude the presence of any additional component, step or procedure, whether or not the same is disclosed herein. In order to avoid any doubt, all compositions claimed herein through use of the term "comprising" may include any additional additive, adjuvant, or compound whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed. The term "or", unless stated otherwise, refers to the listed members individually as well as in any combination.

The term "polymer" is a macromolecular compound prepared by polymerizing monomers of the same or different type. "Polymer" includes homopolymers, copolymers, terpolymers, interpolymers, and so on. The term "interpolymer" means a polymer prepared by the polymerization of at least two types of monomers or comonomers. It includes, but is not limited to, copolymers (which usually refers to polymers prepared from two different types of monomers or comonomers, terpolymers (which usually refers to polymers prepared from three different types of monomers or comonomers), tetrapolymers (which usually refers to polymers prepared from four different types of monomers or comonomers), and the like.

TEST METHODS

Cling force is measured at 250% pre-stretch and 4.5 kg (10 lb) F2 after 48 hours of production. On-Pallet cling is measured using a LanTech stretch wrapper. The film is prestretched by 250%, then applied on a cylindrical drum using a F2 force of 4.5 kg (10 pounds). The film is wrapped six times around the cylindrical drum. The sixth wrap is removed and the free end of the film is attached to a load cell. The load cell is then pulled at a constant speed of 3.78 m/min (12 ft/min) and, simultaneously, the cling force is measured. Cling force is taken as the average of force readings between 4 to 8 seconds. Cling is measured 48 hours after production and in some cases also after 1 week of production.

Cling film is also measured in accordance with ASTM D 4649.

Density is measured in accordance with ASTM D 792.

Melt Index (MI) is measured in accordance with ASTM D 1238, Condition 190°C/2.16 kg. Melt index is inversely proportional to the molecular weight of the polymer.

By way of example and not by limitation, examples of the present disclosure will now be provided.

EXAMPLES

1. **Materials**

The following materials are used to make single-sided stretch cling film.

*A. Olefin block copolymer*

| Resin | $I_2$ (dg/min) | Density g/cm$^3$ (g/cc) | Hard segment (wt %) | Comonomer in Soft Segment (mol%) |
|---|---|---|---|---|
| INFUSE 9500 | 5 | 0.877 | 25 | 18 |
| INFUSE 9530 | 5 | 0.887 | 35 | 18 |
| INFUSE 9507 | 5 | 0.866 | 11 | 18 |

(continued)

| Resin | $I_2$ (dg/min) | Density g/cm$^3$ (g/cc) | Hard segment (wt %) | Comonomer in Soft Segment (mol%) |
|---|---|---|---|---|
| 9808 | 15 | 0.866 | 11 | 18 |
| Comonomer=octene<br>Mol% octene in HS less than 0.9 mol% | | | | |

### B. Polyethylene

| Resin | $I_2$ (dg/min) | Density g/cm$^3$ (g/cc) |
|---|---|---|
| AFFINITY KC8852 | 3 | 0.875 |
| DOWLEX 2247G | 2.3 | 0.917 |
| ATTANE 4404 | 4 | 0.904 |
| Comonomer=octene | | |

Six films (three comparative films [comparative A, B, and C,] and three exemplary films [examples 1, 2, and 3]) are cast extruded under the following conditions.

Description of film fabrication:

20 μm (0.8 mil) thick cast films are made on an Egan line. The line is equipped with a 91.4 cm (36 inch) wide 5 layer die. The die gap was kept constant at 508 μm (20 mil) for all formulations. The layers are labeled from A to E where A corresponds to the cling layer, B, C and D correspond to the core layer and E corresponds to the release layer. The die is fed by five Egan-Davis Standard extruders. The screw size and L/D of each extruder is 7.35 cm (2.5 inches) and 30:1 respectively.

Cast extrusion is performed under the following conditions:

- Extrusion Temp:

  ○ Melt temp target was 274 °C (525°F)
  ○ Profile 149, 218, 266, 266, 266 °C (300, 425, 510, 510, 510°F)

- Die Temp: 274 °C (525°F)
- Chill Roll Temp: 21 °C (70°F)
- Die Gap: 0.5 mm (20 mil)
- Line Speed: 21 m/min (600 ft/min)
- Air Knife Description: 100 mm (4 inch) melt curtain with air knife velocity @ 150 mm (6 inch) H$_2$O
- Film Thickness: 20 μm (0.8 mil)
- Layer Ratios: 10/80/10
- Rate: ~180 kg/hr (~400 lb/hr)

Single-sided stretch cling films (and their properties) produced by the foregoing procedure are provided in Table 1 below. A is the cling layer, B is the release layer, and C is the core layer. (The B layer is composed of three layers when as a five layer cast film, all the B sub-layers composed of the same resin)

Table 1 Properties of Comparatives A-C and Examples 1-3

| | | mil | | | cling layer | | corelayer | | release layer | 48 hr after production | | 1 week after production | | ASTM D 4649 cling (g) | |
|---|---|---|---|---|---|---|---|---|---|---|---|---|---|---|---|
| | | | | | | | | | | CF | sd | CF | sd | unstretched | stretched* |
| Comparative A | Control with KC8852 | 0.8 | 15/70/15 | 70 | DOWLEX 2247 | 100 | DOWLEX 2247 | 100 | DOWLEX 2247 | 56.55 | 3.45 | 57.3 | 4.75 | 126.4 | 99.8 |
| | | | | 30 | AFFINITY KC8852 | | | | | | | | | | |
| | | | | | | | | | | | | | | | |
| Example 1 | 30% Infuse 9500 | 0.8 | 15/70/15 | 70 | DOWLEX 2247 | 100 | DOWLEX 2247 | 100 | DOWLEX 2247 | 76.95 | 6.65 | 69.9 | 3.9 | 199.8 | 139.1 |
| | | | | 30 | Infuse 9500 | | | | | | | | | | |
| | | | | | | | | | | | | | | | |
| Example 2 | 20% Infuse 9500 | 0.8 | 15/70/15 | 80 | DOWLEX 2247 | 100 | DOWLEX 2247 | 100 | DOWLEX 2247 | 39.4 | 1.65 | 44.55 | 5.3 | 134.4 | 88.2 |
| | | | | 20 | Infuse 9500 | | | | | | | | | | |
| | | | | | | | | | | | | | | | |
| Comparative B | 70% ATTANE 4404 | 0.8 | 15/70/15 | 70 | 4404 | 100 | DOWLEX 2247 | 100 | DOWLEX 2247 | 48.25 | 2.2 | | | 127.2 | 94.2 |
| | | | | 30 | DOWLEX 2247 | | | | | | | | | | |
| | | | | | | | | | | | | | | | |
| Example 3 | 10% 9808 | 0.8 | 15/70/15 | 90 | DOWLEX 2247 | 100 | DOWLEX 2247 | 100 | DOWLEX 2247 | 29.4 | 4.9 | | | | |
| | | | | 10 | 9808 | | | | | | | | | | |
| | | | | | | | | | | | | | | | |

EP 2 582 519 B1

(continued)

| | | mil | | cling layer | | corelayer | | release layer | 48 hr after production | | 1 week after production | | ASTM D 4649 cling (g) | |
|---|---|---|---|---|---|---|---|---|---|---|---|---|---|---|
| | | | | | | | | | CF | sd | CF | sd | unstretched | stretched* |
| Comparative C | 100% DOWLEX 2247 | 0.1 | 15/70/15 | 100 | DOWLEX 2247 | 100 | DOWLEX 2247 | 100 | DOWLEX 2247 | 9.9 | 2.5 | | | |
| CF = cling force (g) sd = standard deviation *stretched = 200% stretch | | | | | | | | | | | | | | |

Cast-extruded, single-sided stretch cling film made using the same film structure, except without using OBC, exhibits cling force of about 9.9g. Hence, it can be seen addition of 10 wt% 9808 in the cling layer (containing DOWLEX™ 2247, 2.3 MI, 0.917 g/cm$^3$ (g/cc) LLDPE resin) significantly increases cling force to almost 29g.

At an equivalent level (30 wt%), INFUSE 9500 provides at least 20 g more cling force (35% more cling force) after 48 hours and 21% more cling force after one week of production of the cast films as compared to a control sample with 30 wt% KC 8852 (a random ethylene copolymer).

At less than half the level of ATTANE 4404, INFUSE 9500 provides approximately 60% more cling force after 48 hours of production.

It is specifically intended that the present disclosure not be limited to the embodiments and illustrations contained herein, but include modified forms of those embodiments including portions of the embodiments and combinations of elements of different embodiments as come within the scope of the following claims.

**Claims**

1. A single-sided stretch cling film having three layers comprising:

   a cling layer (A) comprising greater than 5 wt % to 40 wt % of an ethylene/α-olefin block copolymer and from 60 wt % to less than 95 wt % of an ethylene-based polymer;
   a release layer (B) selected from the group consisting of an ethylene-based polymer, a propylene-based polymer, and combinations thereof;
   a core layer (C) located between the cling layer and the release layer, the core layer comprising an ethylene-based polymer; and
   the film has a cling force from 20 g to 100 g, the cling force being measured as indicated in § [0081] of the section of the description titled TEST METHODS.

2. The film of claim 1 wherein the ethylene/α-olefin block copolymer comprises greater than 5 wt % to 35 wt % hard segment and from 13 mol % to 28 mol % units derived from octene in a soft segment.

3. The film of claim 1 wherein the ethylene-based polymer in the cling layer is an LLDPE.

4. The film of claim 1 wherein at least one of the core layer and the release layer comprise an LLDPE.

5. The film of claim 1 wherein each layer comprises an LLDPE with a density greater than 0.91 g/cm$^3$ (g/cc).

6. The single-sided stretch cling film of claim 1 wherein the cling layer comprises greater than 5 wt % to 20 wt % of the ethylene/α-olefin block copolymer and less than 95 wt % to 80 wt % of the ethylene-based polymer; and

   the film has a cling force from 20 g to 50 g.

7. The film of claim 6 wherein the ethylene/α-olefin block copolymer comprises greater than 5 wt % to 35 wt % hard segment and from 13 mol % to 28 mol % units derived from octene in a soft segment.

8. The film of claim 6 wherein the ethylene-based polymer in the cling layer is an LLDPE.

9. The film of claim 6 wherein each layer comprises an LLDPE with a density greater than 0.91 g/cm$^3$ (g/cc).

10. The single-sided stretch cling film of claim 1 wherein the ethylene-based polymer in the cling layer is a linear low density polyethylene having a density greater than 0.91 g/cm$^3$ (g/cc).

11. The film of claim 10 wherein the cling layer comprises 25 wt% to 35 wt% ethylene/α-olefin block copolymer and from 75 wt % to 65 wt % LLDPE; and the film has a cling force from 50 g to 80 g.

12. The film of claim 10 wherein the cling layer comprises greater than 5 wt % to 20 wt % ethylene/α-olefin block copolymer and less than 95 wt % to 80 wt % LLDPE; and the film has a cling force from 20 g to 50 g.

13. The film of claim 10 wherein the ethylene/α-olefin block copolymer comprises greater than 5 wt % to 35 wt % hard segment.

**14.** The film of claim 10 wherein the ethylene/α-olefin block copolymer comprises a soft segment comprising from 13 mol% to 28 mol% units derived from octene.

**15.** The film of claim 10 wherein each layer comprises an LLDPE with a density greater than 0.91 g/cm$^3$ (g/cc).

**Patentansprüche**

**1.** Eine einseitige Stretch-Adhäsionsfolie mit drei Schichten, umfassend:

eine Adhäsionsschicht (A), umfassend mehr als 5 Gew.-% bis 40 Gew.-% ein Ethylen/α-Olefin-Blockcopolymer und 60 Gew.-% bis weniger als 95 Gew.-% ein Polymer auf Ethylenbasis;
eine Trennschicht (B), ausgewählt aus der Gruppe, bestehend aus einem Polymer auf Ethylenbasis, einem Polymer auf Propylenbasis und Kombinationen davon;
eine Kernschicht (C), die sich zwischen der Adhäsionsschicht und der Trennschicht befindet, wobei die Kernschicht ein Polymer auf Ethylenbasis beinhaltet; und
die Folie eine Adhäsionskraft von 20 g bis 100 g aufweist, wobei die Adhäsionskraft wie in § [0081] des Abschnitts der Beschreibung mit dem Titel TESTVERFAHREN angegeben gemessen wird.

**2.** Folie gemäß Anspruch 1, wobei das Ethylen/α-Olefin-Blockcopolymer mehr als 5 Gew.-% bis 35 Gew.-% Hartsegment und 13 Mol-% bis 28 Mol-% von Octen abgeleitete Einheiten in einem Weichsegment beinhaltet.

**3.** Folie gemäß Anspruch 1, wobei das Polymer auf Ethylenbasis in der Adhäsionsschicht ein LLDPE ist.

**4.** Folie gemäß Anspruch 1, wobei mindestens eine der Kernschicht und der Trennschicht ein LLDPE beinhaltet.

**5.** Folie gemäß Anspruch 1, wobei die Schichten jeweils ein LLDPE mit einer Dichte von mehr als 0,91 g/cm$^3$ (g/cc) beinhalten.

**6.** Einseitige Stretch-Adhäsionsfolie gemäß Anspruch 1, wobei die Adhäsionsschicht mehr als 5 Gew.-% bis 20 Gew.-% das Ethylen/α-Olefin-Blockcopolymer und weniger als 95 Gew.-% bis 80 Gew.-% das Polymer auf Ethylenbasis beinhaltet; und die Folie eine Adhäsionskraft von 20 g bis 50 g aufweist.

**7.** Folie gemäß Anspruch 6, wobei das Ethylen/α-Olefin-Blockcopolymer mehr als 5 Gew.-% bis 35 Gew.-% Hartsegment und 13 Mol-% bis 28 Mol-% von Octen abgeleitete Einheiten in einem Weichsegment beinhaltet.

**8.** Folie gemäß Anspruch 6, wobei das Polymer auf Ethylenbasis in der Adhäsionsschicht ein LLDPE ist.

**9.** Folie gemäß Anspruch 6, wobei die Schichten jeweils ein LLDPE mit einer Dichte von mehr als 0,91 g/cm$^3$ (g/cc) beinhalten.

**10.** Einseitige Stretch-Adhäsionsfolie gemäß Anspruch 1, wobei das Polymer auf Ethylenbasis in der Adhäsionsschicht ein lineares Polyethylen niedriger Dichte mit einer Dichte von mehr als 0,91 g/cm$^3$ (g/cc) ist.

**11.** Folie gemäß Anspruch 10, wobei die Adhäsionsschicht 25 Gew.-% bis 35 Gew.-% Ethylen/α-Olefin-Blockcopolymer und 75 Gew.-% bis 65 Gew.-% LLDPE beinhaltet; und die Folie eine Adhäsionskraft von 50 g bis 80 g aufweist.

**12.** Folie gemäß Anspruch 10, wobei die Adhäsionsschicht mehr als 5 Gew.-% bis 20 Gew.-% Ethylen/α-Olefin-Blockcopolymer und weniger als 95 Gew.-% bis 80 Gew.-% LLDPE beinhaltet; und die Folie eine Adhäsionskraft von 20 g bis 50 g aufweist.

**13.** Folie gemäß Anspruch 10, wobei das Ethylen/α-Olefin-Blockcopolymer mehr als 5 Gew.-% bis 35 Gew.-% Hartsegment beinhaltet.

**14.** Folie gemäß Anspruch 10, wobei das Ethylen/α-Olefin-Blockcopolymer ein Weichsegment beinhaltet, das 13 Mol-% bis 28 Mol-% von Octen abgeleitete Einheiten beinhaltet.

**15.** Folie gemäß Anspruch 10, wobei die Schichten jeweils ein LLDPE mit einer Dichte von mehr als 0,91 g/cm$^3$ (g/cc)

beinhalten.

**Revendications**

1. Un film étirable à trois couches adhérant sur une face comprenant :

   une couche adhérente (A) comprenant de plus de 5 % en poids à 40 % en poids d'un copolymère à blocs éthylène/α-oléfine et de 60 % en poids à moins de 95 % en poids d'un polymère à base d'éthylène ;
   une couche antiadhérente (B) sélectionnée dans le groupe consistant en un polymère à base d'éthylène, un polymère à base de propylène et des combinaisons de ceux-ci ;
   une couche centrale (C) située entre la couche adhérente et la couche antiadhérente, la couche centrale comprenant un polymère à base d'éthylène ; et
   le film ayant une force d'adhérence qui va de 20 g à 100 g, la force d'adhérence étant mesurée comme indiqué au paragraphe [0081] de la section de la description intitulée MÉTHODES D'ESSAIS.

2. Le film de la revendication 1, le copolymère à blocs éthylène/α-oléfine comprenant de plus de 5 % en poids à 35 % en poids d'un segment dur et de 13 % en moles à 28 % en moles d'unités dérivées d'un octène dans un segment mou.

3. Le film de la revendication 1, le polymère à base d'éthylène dans la couche adhérente étant un LLDPE.

4. Le film de la revendication 1, une couche au moins parmi la couche centrale et la couche antiadhérente comprenant un LLDPE.

5. Le film de la revendication 1, chaque couche comprenant un LLDPE présentant une masse volumique supérieure à 0,91 g/cm$^3$ (g/cc).

6. Le film étirable adhérant sur une face de la revendication 1, la couche adhérente comprenant de plus de 5 % en poids à 20 % en poids du copolymère à blocs éthylène/α-oléfine et de moins de 95 % en poids à 80 % en poids du polymère à base d'éthylène ; et le film ayant une force d'adhérence qui va de 20 g à 50 g.

7. Le film de la revendication 6, le copolymère à blocs éthylène/α-oléfine comprenant de plus de 5 % en poids à 35 % en poids d'un segment dur et de 13 % en moles à 28 % en moles d'unités dérivées d'un octène dans un segment mou.

8. Le film de la revendication 6, le polymère à base d'éthylène dans la couche adhérente étant un LLDPE.

9. Le film de la revendication 6, chaque couche comprenant un LLDPE présentant une masse volumique supérieure à 0,91 g/cm$^3$ (g/cc).

10. Le film étirable adhérant sur une face de la revendication 1, le polymère à base d'éthylène dans la couche adhérente étant un polyéthylène basse densité linéaire présentant une masse volumique supérieure à 0,91 g/cm$^3$ (g/cc).

11. Le film de la revendication 10, la couche adhérente comprenant de 25 % en poids à 35 % en poids d'un copolymère à blocs éthylène/α-oléfine et de 75 % en poids à 65 % en poids d'un LLDPE ; et le film ayant une force d'adhérence qui va de 50 g à 80 g.

12. Le film de la revendication 10, la couche adhérente comprenant de plus de 5 % en poids à 20 % en poids d'un copolymère à blocs éthylène/α-oléfine et de moins de 95 % en poids à 80 % en poids d'un LLDPE ; et le film ayant une force d'adhérence qui va de 20 g à 50 g.

13. Le film de la revendication 10, le copolymère à blocs éthylène/α-oléfine comprenant de plus de 5 % en poids à 35 % en poids d'un segment dur.

14. Le film de la revendication 10, le copolymère à blocs éthylène/α-oléfine comprenant un segment mou qui comprend de 13 % en moles à 28 % en moles d'unités dérivées d'un octène.

15. Le film de la revendication 10, chaque couche comprenant un LLDPE présentant une masse volumique supérieure à 0,91 g/cm$^3$ (g/cc).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007292693 A
- US 376835 A
- US 20060199930 A
- WO 2005090427 A

**Non-patent literature cited in the description**

- **POTEMKIN.** *Physical Review E,* 1998, vol. 57 (6), 6902-6912
- **DOBRYNIN, J.** *Chem.Phvs.,* 1997, vol. 107 (21), 9234-9238
- Periodic Table of the Elements. CRC Press, Inc, 2003